Europäisches Patentamt

European Patent Office

Office européen des brevets

(11) Veröffentlichungsnummer: **0 398 371**
A2

## (12) EUROPÄISCHE PATENTANMELDUNG

(21) Anmeldenummer: 90109497.9

(22) Anmeldetag: 18.05.90

(51) Int. Cl.5: **G06F 9/22**

(30) Priorität: 19.05.89 DE 3916352
19.05.89 DE 3916322

(43) Veröffentlichungstag der Anmeldung:
22.11.90 Patentblatt 90/47

(84) Benannte Vertragsstaaten:
AT BE CH DE DK ES FR GB IT LI NL SE

(71) Anmelder: Siemens Aktiengesellschaft
Wittelsbacherplatz 2
D-8000 München 2(DE)

(72) Erfinder: Eickel, Karl-Heinz, Dipl.-Ing.
Hirtenweg 12
D-8028 Taufkirchen(DE)
Erfinder: Haggenmiller, Alex, Dipl.-Ing.
Ringstrasse 77
D-8221 Grabenstätt(DE)

(54) Verfahren und Anordnung zur Steuerung von mikroprogrammierten Maschinenbefehlsabläufen in Datenverarbeitungsanlagen.

(57) Zur Steuerung des zeitgerechten Entscheidungsablaufes und der Parameterbereitstellung werden, um Verlustzyklen vermeiden, die notwendigen Steuerinformationen mit ausreichendem Vorlauf vor der jeweils ersten Elementaroperation eines jeden Maschinenbefehls einem parallel zum eigentlichen Mikrobefehlsspeicher (ECM-A/B) angesteuerten Steuerspeicher (PECM-N, PECM-C) entnommen und für die Ablaufsteuerung zur Verfügung gestellt. Analoges gilt für die Bereitstellung benötigter Speicheradressen durch das Adressenrechenwerk (ADW), so daß Speicherzugriffe für das Operandenlesen rechtzeitig veranlaßt werden können, ohne daß sich bei verkürzter Zyklusdauer für die Elementaroperationen Verlustzyklen ergeben. Gleiches gilt für die Behandlung von Operandenkonflikten. Zusätzliche Einsparung von Verlustzyklen bei kurzen Befehlen mit bedingtem Ende durch Ausnutzen der frühen Steuerinformation für die frühere Erkennung des tatsächlichen Maschinenbefehlsendes durch vorgezogene Tests.

FIG 4

EP 0 398 371 A2

## Verfahren und Anordnung zur Steuerung von mikroprogrammierten Maschinenbefehlsabläufen in Datenverarbeitungsanlagen

Die Erfindung betrifft ein Verfahren und eine Anordnung zur Steuerung des zeitgerechten Entscheidungsablaufes und der Parameterbereitstellung bei mikroprogrammierten Maschinenbefehlsabläufen gemäß dem Oberbegriff des Patentanspruches 1.

Die Leistung einer Zentraleinheit ist u.a. sehr stark davon abhängig, wieviel Zeit der Prozessor für die Ausführung eines Maschinenbefehls benötigt. Bei in üblicher Weise mikroprogrammiert gesteuerten Maschinenbefehlsabläufen werden für die Ausführung eines Maschinenbefehles eine oder mehrere Elementaroperationen benötigt, wobei die Mikrobefehle für die einzelnen Elementaroperationen nacheinander einem entsprechenden Mikrobefehlsspeicher entnommen werden. Ein Ansatzpunkt für die Steigerung der Leistung besteht daher in der Verkürzung der Zykluszeit für die Elementaroperationen, was durch die fortschreitende Schaltkreistechnologie begünstigt wird. Da andererseits aber die durch die Leitungslängen zwischen den einzelnen Baugruppen bedingte Übertragungsdauer der Signale weniger stark beeinflußbar ist, ergeben sich bei Verkürzung der Zyklusdauer für die Elementaroperationen in zunehmendem Maße Schwierigkeiten, weil die verbleibenden Zeiten für die Ableitung von Entscheidungen und Steuersignalen und für davon abhängige Reaktionszeiten, beispielsweise für die Bereitstellung der richtigen Parameter, nicht mehr ausreichen.

Ist die Ausführung von Elementaroperationen z.B. mit einem Speicherzugriff verbunden, dann müssen die zugehörigen Parameter, nämlich Funktionscode und Speicheroperandenadresse, jeweils im Vorlauf zur auszuführenden Elementaroperation bereitgestellt und dann durch einen vorgegebenen Phasentakt der laufenden Elementaroperation in der Speichersteuereinrichtung wirksam werden.

Bei einer Verkürzung der Zykluszeit für die Elementaroperationen verschiebt sich daher der Zeitpunkt für die Bereitstellung der jeweiligen Speicheroperandenadresse in die Nähe des Zeitpunkts für das Wirksamwerden der Parameter durch den vorgegebenen Phasentakt, so daß die Zeitdauer für die Übergabe der bereitgestellten Parameter bis zum Auslösen der Speicherzugriffsstart gegebenenfalls unzulässig verkürzt wird und die Modifikation der gültigen Speicheroperandenadresse für den Übergang auf die nachfolgende Adresse in die nachfolgende Elementaroperation verlegt werden muß, die dann keinen weiteren Speicherzugriff ausführen kann.

Analoges gilt für die am Ende eines Maschinenbefehls und beim Auftreten von Operandenkonflikten zu treffenden Entscheidungen und deren Auswirkungen auf die Parameterbereitstellung.

Die Folge sind dann zusätzliche Verlust-Elementaroperationen zur Zeitüberbrückung, die die Ausführung eines Maschinenbefehls verlängern und daher die durch die Verkürzung der Zyklusdauer für die Elementaroperationen beabsichtigte Leistungssteigerung wieder aufheben. Dies gilt insbesondere für nur aus einer oder zwei Elementaroperationen bestehenden Maschinenbefehlen.

Aufgabe der Erfindung ist es daher, ein Verfahren und eine Anordnung zu schaffen, bei denen trotz zunehmender Verkürzung der Zyklusdauer für die einzelnen Elementaroperationen die Ausführungszeiten für die einzelnen Maschinenbefehle nicht durch unnötige Verlust-Elementaroperationen verlängert werden, sondern durch zeitgerechte, auf die Dauer der Elementaroperationen abgestimmte Entscheidungsabläufe mit rechtzeitiger Parameterbereitstellung auf vorgegebene Ablaufzustände in geeigneter Weise reagiert wird.

Diese Aufgabe wird beim Verfahren gemäß der Erfindung dem Prinzip nach durch die kennzeichnenden Merkmale des Patentanspruches 1 gelöst.

Ausgangspunkt für das neue Verfahren ist dabei ein neben dem Mikrobefehlsspeicher vorgesehener Steuerspeicher, der wie der Mikrobefehlsspeicher jeweils mit derselben Startadresse angesteuert wird, aber jeweils nur die für die Entscheidungen und Parameterbereitstellung notwendigen Teile des zugehörigen Mikrobefehls aus dem Mikrobefehlsspeicher gespeichert enthält. Außerdem enthält der Steuerspeicher nicht zu allen Mikrobefehlen im Mikrobefehlsspeicher Eintragungen, sondern nur zu den Mikrobefehlen für die jeweils erste Elementaroperation eines jeden Maschinenbefehls, der durch die Startadresse unmittelbar adressierbar ist.

Wegen der dadurch bedingten geringeren Speicherkapazität für diesen Speicher kann als Speicher notfalls einer mit schnellerer Zugriffszeit verwendet werden. Außerdem können die aus ihm gelesenen Steuerinformationen unmittelbar für die Ablaufsteuerung verfügbar gemacht werden, bevor diese auf den aus dem Mikrobefehlsspeicher zwar gleichzeitig gelesenen, aber im Hinblick auf die auszuführende zugehörige Elementaroperation erst später freigegebenen Mikrobefehl normalerweise reagieren kann. Die Steuerinformationen aus dem Steuerspeicher ermöglichen daher eine Entkopplung von der im Hinblick auf die zugehörige Elementaroperation vorgegebenen taktgebundenen Aufbereitung der eigentlichen Mikrobefehle.

Durch die schon sehr früh in der letzten Elementaroperation eines Maschinenbefehls zur Verfügung stehenden Steuerinformationen können z.B. bei der Ausführung von nur aus einer Elementaroperation bestehenden Maschinenbefehlen mit Speicherzugriff diese Speicherzugriffe bereits im Vorlauf zur zugehörigen Elementaroperation so frühzeitig ausgelöst werden, daß sie mit dem vorgegebenen Übernahmetakt von der Speichersteuerung entgegengenommen werden können, bevor sich die Parameter gegen Ende einer Elementaroperation ändern, was bei Ausführung erst in der zugehörigen Elementaroperation wegen der Verkürzung der Zyklusdauer nicht möglich wäre und zu einer Verlust-Elementaroperation führen würde.

Weiterbildungen für das Verfahren gemäß der Erfindung ergeben sich aus den Unteransprüchen 2 bis 11:

Damit zum Beispiel die frühzeitige Bereitstellung der Steuer informationen auch bei aus mehreren Elementaroperationen bestehende Maschinenbefehlen möglich ist, sind im Mikrobefehlsspeicher zusätzlich zu jedem Mikrobefehl auch die benötigten Steuer informationen aus dem jeweils folgenden Mikrobefehl abgespeichert, so daß hierauf im Vorlauf zurückgegriffen werden kann.

Um bei Speicherzugriffen auch die zugehörige Speicheradresse zeitgerecht zum Funktionscode verfügbar zu haben, wird im Vorlauf zur ersten Elementaroperation unmittelbar die bereitgestellte Speicherstartadresse unter Umgehung des Adressenrechenwerkes und im Vorlauf zu Folge-Elementaroperationen dann die im Zwischenregister des Adressenrechenwerkes rechtzeitig verfügbare Adresse als Speicheradresse durchgeschaltet.

In analoger Weise kann auf Operandenkonflikte früher reagiert und das notwendige Nachlesen des Operanden noch in der letzten Elementaroperation eines Maschinenbefehls ausgeführt werden, so daß nur eine Verlust-Elementaroperation entsteht statt bisher drei Verlust-Elementaroperationen bei der Lösung entsprechend der DE-PS 36 03 240.

Die Umschaltung auf die jeweils zuständige, bereits im Vorlauf bereitstehende Steuerinformation kann dabei wie bisher abhängig von einem die letzte Elementaroperation eines Maschinenbefehls kennzeichnenden Steuerbit im aus dem Mikrobefehlsspeicher gelesenen Mikrobefehl erfolgen, das in Verbindung mit dem positiven Ergebnis eines gegebenenfalls durchgeführten Tests ein das tatsächliche Ende des Maschinenbefehls anzeigendes Signal in der jeweils letzten Elementaroperation auslöst.

Für eine Reihe von möglicherweise notwendig werdenden Steuerreaktionen liegt dieser Zeitpunkt aber zu spät. Daher wird im Vorlauf zum eigentlichen Endesignal bereits ein frühes Endesignal vor Beginn der letzten Elementaroperation eines Maschinen befehls erzeugt, das die Einleitung der früher notwendig werdenden Steuerfunktionen übernimmt.

Die Ermittlung des frühen Endesignales ist aber nur bei Maschinenbefehlen mit unbedingtem Befehlsende oder bei aus mehreren Elementaroperationen bestehenden Maschinenbefehlen, bei denen die jeweilige Folge von Mikrobefehlen durch einen das unbedingte Ende kennzeichnenden Mikrobefehl abgeschlossen wird, ohne weiteres und ohne Verzug möglich. Das trifft jedoch nicht bei beispielsweise nur aus einer oder zwei Elementaroperationen bestehenden Maschinenbefehlen mit bedingtem Befehlsende zu. In diesem Falle würde die herkömmliche Steuerung der Mikrobefehlsfolgen über eine Verzweigung in einen Mikrobefehl mit mikroprogrammiertem unbedingtem Ende zu zusätzlichen, die Verarbeitungsleistung mindernden Verlustelementaroperationen führen. Die hierdurch bedingten Leistungsverluste sind bedeutend, da gerade der Anteil von nur aus einer oder zwei Elementaroperationen bestehenden Maschinenbefehlen in der Regel besonders groß ist. Gemäß einer Weiterbildung der Erfindung entsprechend Patentanspruch 9 wird daher in diesen Fällen die tatsächliche letzte Elementaroperation eines Maschinenbefehls anhand von zusätzlichen Steuerinformationen aus dem Steuerspeicher direkt ermittelt und das frühe Endesignal zeitgerecht im Vorlauf zu dieser letzten Elementaroperation erzeugt.

Eine entsprechende Schaltungsanordnung gemäß der Erfindung ergibt sich aus den Merkmalen des Patentanspruches 12, während die weiteren Patentansprüche 13 bis 18 sich auf Weiterbildungen dieser Anordnung beziehen.

Wesentlicher Bestandteil sind dabei die neben dem eigentlichen Mikrobefehlsspeicher vorgesehenen Steuerspeicher für die rechtzeitige Bereitstellung der jeweils benötigten Steuerinformationen, anhand derer nicht nur Speicherstarts für das Operandennachlesen frühzeitiger ausgelöst werden können, sondern außerdem auf das Ende von Maschinenbefehlen und auf Operandenkonflikte rechtzeitiger reagiert werden kann, so daß trotz der Verkürzung der Zyklusdauer für die einzelnen Elementaroperatio nen Verlust-Elementaroperationen weitgehend vermieden werden.

Einzelheiten der Erfindung seien nachfolgend anhand eines in der Zeichnung dargestellten Ausführungsbeispieles näher erläutert.

Im einzelnen zeigen:

FIG 1 ein Blockschaltbild einer erfindungsgemäßen Schaltungsanordnung für die Parameterbereitstellung bei Speicherzugriffen,

EP 0 398 371 A2

FIG 2 ein Ablaufdiagramm zur Parameterbereitstellung durch eine Schaltungsanordnung bekannter Art,

FIG 3 ein Ablaufdiagramm zur Schaltungsanordnung gemäß Figur 1,

FIG 4 ein gegenüber Figur 1 erweitertes Blockschaltbild der relevanten Teile einer gemäß der Erfindung arbeitenden Datenverarbeitungsanlage,

FIG 5 ein zugehöriges Ablaufdiagramm in Anlehnung an das von Figur 1,

FIG 6 eine Gegenüberstellung von Ablaufdiagrammen bei der Behandlung von Operandenkonflikten,

FIG 7 ein Blockschaltbild zur Ableitung des frühen Endesignales gemäß der Erfindung,

FIG 8 Ablauffolgen bei aus einer oder zwei Elementaroperationen bestehenden Maschinenbefehlen mit bedingtem Befehlsende unter Berücksichtigung von eventuell auftretenden Operandenkonflikten,

FIG 9 und FIG 10 Ablaufdiagramme zum Blockschaltbild von Figur 7 für einen aus zwei Elementaroperationen bestehenden Maschinenbe fehl mit bedingtem Ende bei erfülltem und nicht erfülltem Test in der zweiten Elementaroperation unter Berücksichtigung eines Operandenkonfliktes.

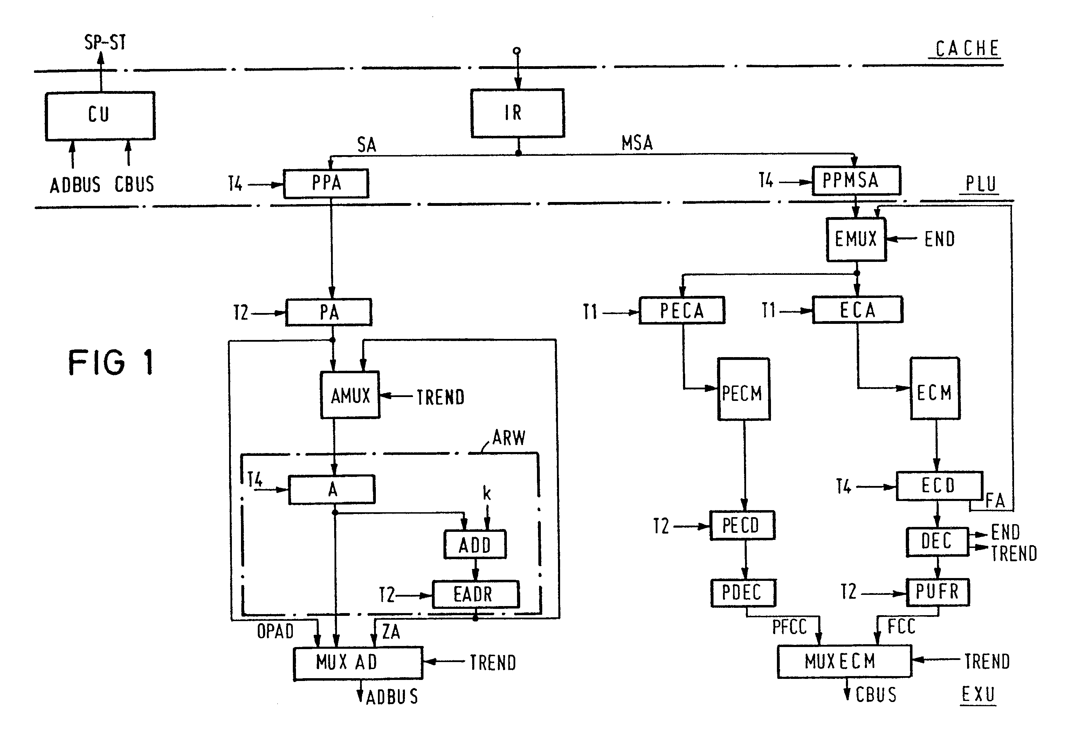

Das Blockschaltbild in FIG 1 zeigt eine Schaltungsanordnung zur Steuerung der Parameterbereitstellung für Zugriffe eines Prozessors zu einem Speicher CACHE bei mikroprogrammgesteuerten Maschinenbefehlsabläufen. In das Befehlsregister IR der Steuereinheit PLU wird ein Maschinenbefehl übergeben, aus dem die Mikroprogrammstartadresse MSA für den Mikrobefehlsspeicher ECM und die Speicherstartadresse SA für das Adressenrechenwerk ARW in zwei Bereitstellungsregister PPMSA und PPA eingetragen werden. Die beiden Adressen werden anschließend an die Ausführungseinheit EXU übergeben, in der die Mikroprogrammstartadresse MSA in zwei parallel geschalteten Adressenregistern ECA und PEGA jeweils gespeichert wird und die Speicherstartadresse SA in das Register PA übernommen wird. Beide Startadressen werden im voraus von der Steuereinheit PLU berechnet, so daß sie in den Registern PA, ECA und PECA bereits frühzeitig mit den Phasentakten T2 und T1 einer Elementaroperation zur Verfügung stehen.

Der für die erste Elementaroperation eines Maschinenbefehls gültige Funktionscode PFCC wird jeweils während der letzten Elementaroperation des vorhergehenden Maschinenbefehls dem gesonderten Steuerspeicher PECM entnommen und in das Leseregister PECD mit angeschlossenem Funktionsdecoder PDEC eingetragen. Die Speicherstartadresse SA steht als Speicheroperandenadresse OPAD unter Umgehung des Adressenrechenwerks ARW für die Weiterleitung zur Speichersteuereinrichtung CU unmittelbar zur Verfügung.

Die Bereitstellung des Funktionscodes PFCC und der Speicheroperandenadresse OPAD erfolgt zeitversetzt gegenüber dem eigentlichen Bereitstellungstakt T4 bereits mit dem Phasentakt T2 während der letzten Elementaroperation des vorhergehenden Maschinenbefehls, so daß spätestens mit dem Phasentakt T4 der Zugriffsstart SP-ST für den Speicher CACHE ausgelöst wird und der Speicherzugriff in der zugehörigen ersten Elementaroperation des nachfolgenden Maschinenbefehls ablaufen kann. Für die Durchschaltung der Parameter auf das zur Speichersteuereinrichtung CU führende Leitungssystem ADBUS, CBUS sind zwei Auswahlschalter MUXAD und MUXECM vorgesehen, wobei ein Eingang des Schalters MUXAD an den Ausgang des Registers PA und ein Eingang des Schalter MUXECM an den Ausgang des Funktionsdecoders PDEC angeschlossen ist. Die Steuerung der beiden Auswahlschalter erfolgt durch das, die jeweils letzte Elementaroperation eines Maschinenbefehls kennzeichnende Signal TREND.

Löst ein Maschinenbefehl mehrere Elementaroperationen aus, so wird der für die zweite Elementaroperation gültige Funktionscode FCC als Teil des mit der Startadresse MSA parallel ausgewählten Mikrobefehlswortes der ersten Elementaroperation aus dem Mikrobefehlsspeicher ECM gelesen und mit dem Bereitstellungstakt T4 in das Leseregister ECD übernommen. Die darin enthaltene Folgeadresse FA wird über einen Eingangsschalter EMUX auf den Eingang des Adressenregisters ECA zur Ansteuerung des Mikrobefehlswortes der zweiten Elementaroperation, dem gegebenenfalls der gültige Funktionscode FCC für die dritte Elementaroperation des Maschinenbefehls angehängt ist, rückgekoppelt. Der jeweils mit dem Mikrobefehl gelesene und anschließend dekodierte Funktionscode FCC für die zweite Elementaroperation und fortlaufend für jede weitere Elementaroperation eines Maschinenbefehls steht folglich zeitlich versetzt um eine Elementaroperation frühzeitig zur Verfügung und wird im Pufferregister PUFR mit dem Phasentakt T2 zeitgerecht im Vorlauf zur zugehörigen Elementaroperation für die Weiterleitung an das Teilleitungssystem CBUS bereitgestellt.

Die zugehörige Speicheroperandenadresse ZA für die zweite Elementaroperation wird aus der mit dem Bereitstellungstakt T4 der letzten Elementaroperation eines Maschinenbefehls im Adressenregister A zur Verfügung stehenden Speicherstartadresse SA durch Addition einer konstanten Adressengröße K in der Addiereinrichtung ADD des Adressenrechenwerkes ARW gebildet und das Ergebnis in das Zwischenregister EADR eingeschrieben. Die Bereitstellung erfolgt zeitgleich zu der im Pufferregister PUFR mit dem Phasentakt T2. Dadurch, daß der Ausgang des Zwischenregisters EADR mit einem Eingang des Auswahlschalters MUXAD direkt verbunden ist, liegt die Speicheroperandenadresse ZA ebenfalls im Vorlauf zur

4

zugehörigen zweiten Elementaroperation zeitgerecht am Teilleitungssystem ADBUS an.

Das Ergebnis der Adressenrechnung wird vom Zwischenregister EADR zu einem weiteren Eingangsschalter AMUX für die wahlweise Kopplung des Registers A mit dem Übernahmeregister PA oder dem Zwischenregister EADR rückgekoppelt. Die Speicheroperandenadresse für die dritte und gegebenenfalls fortlaufend weitere Elementaroperationen des Maschinenbefehls wird in gleicher Weise aus der jeweils rückgekoppelten zwischengespeicherten Adresse vom Adressenrechenwerk ARW ermittelt und zur Speichersteuereinrichtung CU übertragen.

Die Auswahl der Startadresse MSA für die erste Elementaroperation oder der Folgeadressen FR für die zweite bzw. fortlaufend jede weitere Elementaroperation eines Maschinenbefehls durch den Eingangsschalter EMUX erfolgt dagegen mit dem von einem Steuerbit im Mikrobefehl für die jeweils letzte Elementaroperation abgeleiteten Signal END, das im Verlauf zumn Signal TREND vom Decoder DEC geliefert wird.

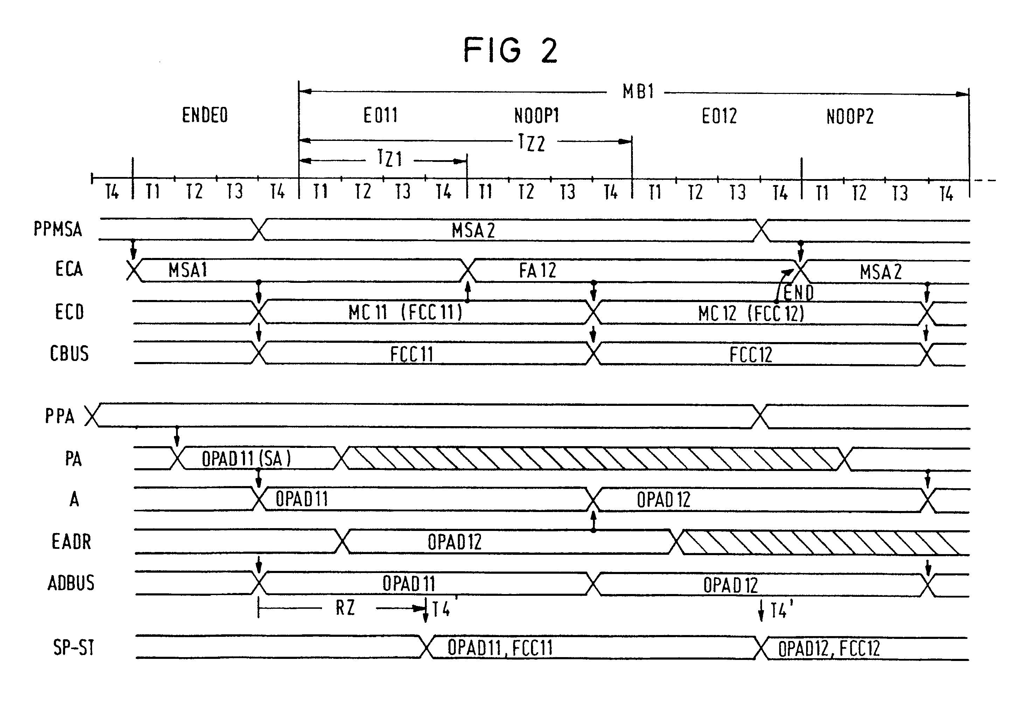

Das Ablaufdiagramm für die Bereitstellung der Parameter bei einer Schaltungsanordnung bekannter Art ohne die erfindungswesentlichen Merkmale ist in FIG 2 abgebildet. Als Beispiel dient ein Maschinenbefehl MB1, bestehend aus zwei Elementaroperationen EO11 und EO12. Das Taktschema für die Ausführung einer Elementaroperation umfaßt vier Phasentakte T1...T4. Die Startadresse MSA1 für die Ansteuerung des Mikrobefehlsspeichers ECM und die Startadresse SA als erste Speicheroperandenadresse OPAD11 werden bereits mit dem Phasentakt T4 von den Bereitstellungsregistern PPMSA und PPA in der vorletzten Elementaroperation des vorhergehenden Maschinenbefehls MBn übernommen und mit dem Phasentakt T1 im Adressenregister ECA und mit dem Phasentakt T2 im Übernahmeregister PA während der letzten Elementaroperation ENDEO wirksam.

Der für die Elementaroperation EO11 gültige Funktionscode FCC!! wird als Teil des ausgelesenen Mikrobefehls MC11 in das Leseregister ECD mit dem Bereitstellungtakt T4 eingetragen und steht damit für das Teilleitungssystem CBUS zur Verfügung. Gleichzeitig wird die zugehörige erste Speicheroperandenadresse OPAD11 vom Adressenregister A aus für das Teilleitungssystem ADBUS geliefert.

Steht eine genügend lange Maschinenzykluszeit $T_{Z2}$ für eine Elementaroperation zur Verfügung, so kann in jeder Elementaroperation ein Speicherzugriffsstart SP-ST erfolgen, indem die Parameter jeweils am Ende der vorhergehenden Elementaroperation, z.B. mit dem Takt T4, bereitgestellt werden und der Zugriff nach der vorgegebenen Übergabezeit der Parameter an die Speichersteuereinrichtung CU etwa in der Mitte einer Elementaroperation, z.B. mit dem Phasentakt $T4'$, ausgelöst wird. Bei Verkürzung der Maschinenzykluszeit für eine Elementaroperation auf den Wert $T_{Z1}$ rückt der Zeitpunkt $T4'$ für das Auslösen des Speicherzugriffsstart SP-ST näher an den Zeitpunkt für die Adressenmodifikation mit dem Bereitstellungstakt T4. Die Speicheroperandenadresse OPAD12 für den Speicherzugriff in der darauffolgenden Elementaroperation EO12 würde dann bereits zu einem Zeitpunkt bereitgestellt werden, zu dem die Speicheroperandenadresse OPAD11 noch gültig zur Verfügung stehen muß, um die Laufzeit RZ zur Speichersteuereinrichtung CU zu überbrücken.

Die Bereitstellung des Funktionscodes FCC12 und die Berechnung der Speicheroperandenadresse OPAD12 im Adressenrechenwerk ARW mit anschließender Bereitstellung aus dem Adressenregister A kann dann erst am Ende der darauffolgenden Elementaroperation, erfolgen die somit bezüglich des Speicherzugriffs zu einer Verlust-Elementaroperation NOOP1 wird, in der kein weiterer Start SP-ST ausgelöst werden kann. In gleicher Weise entsteht eine weitere Verlust-Elementaroperation NOOP2 bezüglich des Speicher zugriffs während des Ablaufs der Elementaroperation EO12.

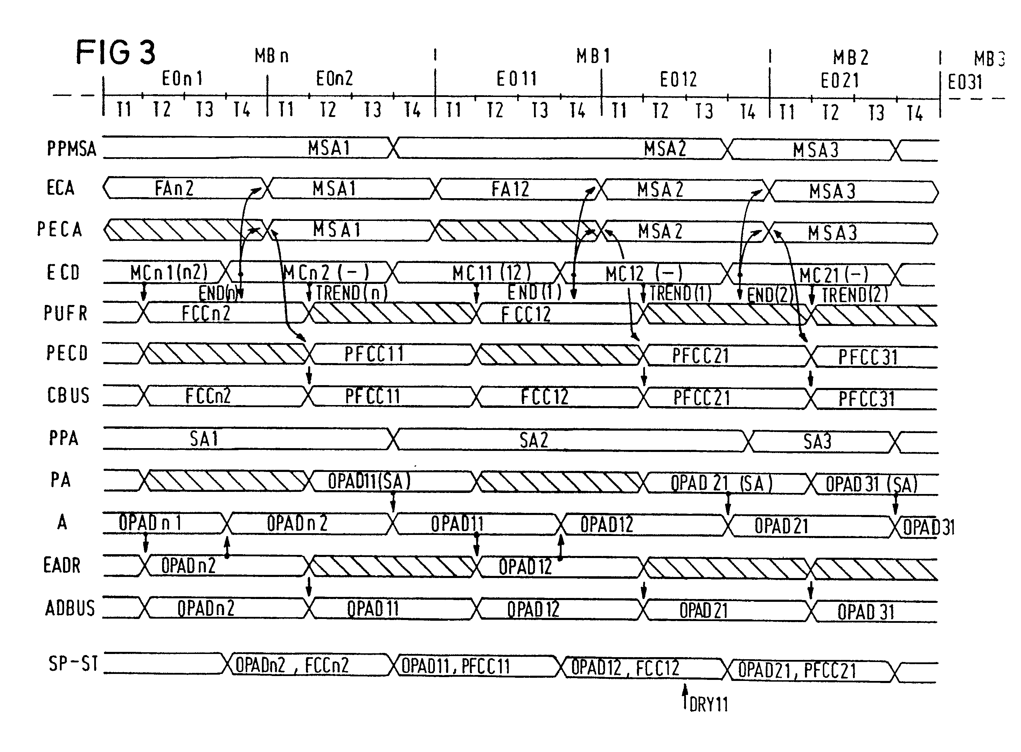

Das auf die Schaltungsanordnung gemäß FIG 1 bezugnehmende Ablaufdiagramm in FIG 3 verdeutlicht die Lösung des der Erfindung zugrundeliegenden und gemäß FIG 2 veranschaulichten Problems. Dargestellt sind die Maschinenbefehlsabläufe MBn, MB1 sowie MB2 mit den zugehörigen Elementaroperationen EOn1 und EOn2, EO11 und EO12 sowie EO21. Der lediglich angedeutete Maschinenbefehl MB3 soll als erste Elementaroperation die Elementaroperation EO31 auslösen.

Die Mikroprogrammstartadresse MSA1 des ersten Maschinenbefehls MB1 und die Speicherstartadresse SA als erste Speicheroperandenadresse OPAD11 werden in bekannter Art mit den Phasentakten T1 bzw. T2 während der letzten Elementaroperation EOn2 des vorhergehenden Maschinenbefehls MBn wirksam. Mit der Mikroprogrammstartadresse MSA1 aus dem Register PECA wird der gesonderte Steuerspeicher PECM angesteuert, aus dem der gültige Funktionscode PFCC11 gelesen und für den Speicherzugriff in der zugehörigen Elementaroperation EO11 bereits im Vorlauf während der letzten Elementaroperation EOn2 des Maschinenbefehls MBn mit dem Phasentakt T2 bereitgestellt wird. Das Signal TREND wird aus dem zuvor gelesenen Mikrobefehl MCn2 ermittelt und bewirkt die Weiterleitung des gültigen Funktionscodes PFCC11 aus dem Leseregister PECD mit angeschlossenem Funktionsdekoder PDEC an das Teilleitungssystem CBUS.

Gleichzeitig erhält das Teilleitungssystem ADBUS die Speicheroperandenadresse OPAD11 direkt aus dem Übernahmeregister PA, indem dessen Ausgang unter Umgehung des Adressenrechenwerkes ARW durch den Auswahlschalter MUXAD durchgeschaltet wird. Beide Parameter für den in der Elementaroperation EO11 auszuführenden Speicherzugriff liegen somit so frühzeitig an, daß mit dem Bereitstellungstakt T4 der letzten Elementaroperation EOn2 der zugehörige Zugriffsstart SP-ST ausgeführt werden kann.

Die Mikroprogrammstartadresse MSA1 steuert auch den parallel ge schalteten eigentlichen Mikrobefehlsspeicher ECM zur Lieferung des Mikrobefehlswortes MC11, dem der bereits für die Elementaroperation EO12 gültige Funktionscode FCC12 angehängt ist. Dieser wird in dem Pufferregister PUFR zwischengespeichert und somit um eine Elementaroperation vorauslaufend mit dem Phasentakt T2 zur Verfügung gestellt. Die Speicheroperandenadresse OPAD12 wird im Adressenrechenwerk ARW nach bekannter Art errechnet und ebenfalls mit dem Phasentakt T2 unmittelbar aus dem Zwischenregister EADR zeitgerecht bereitgestellt.

Analog dazu werden der Funktionscode PFCC21 für den einzigen Speicherzugriff beim Maschinenbefehlsablauf MB2 vom gesonderten Steuerspeicher PECM und die Mikroprogrammstartadresse MSA2 als Speicheroperandenadresse OPAD21 vom Übernahmeregister PA zeitlich im voraus während der letzten Elementaroperation EO12 des vorhergehenden Maschinenbefehls MB2 geliefert und der Speicherzugriff gestartet.

Die jeweils mit dem Speicherzugriffsstart SP-ST für die zugehörige Elementaroperation angeforderten Lesedaten treffen in der jeweils nachfolgenden Elementaroperation ein. So erfolgt der Start des Speicherzugriffs für die Elementaroperation EO11 mit dem Phasentakt T4 in der Elementaroperation EOn2, die angeforderten zugehörigen Daten DRY11 stehen dann etwa mit dem Phasentakt T3 der Elementaroperation EO12 zur Verfügung.

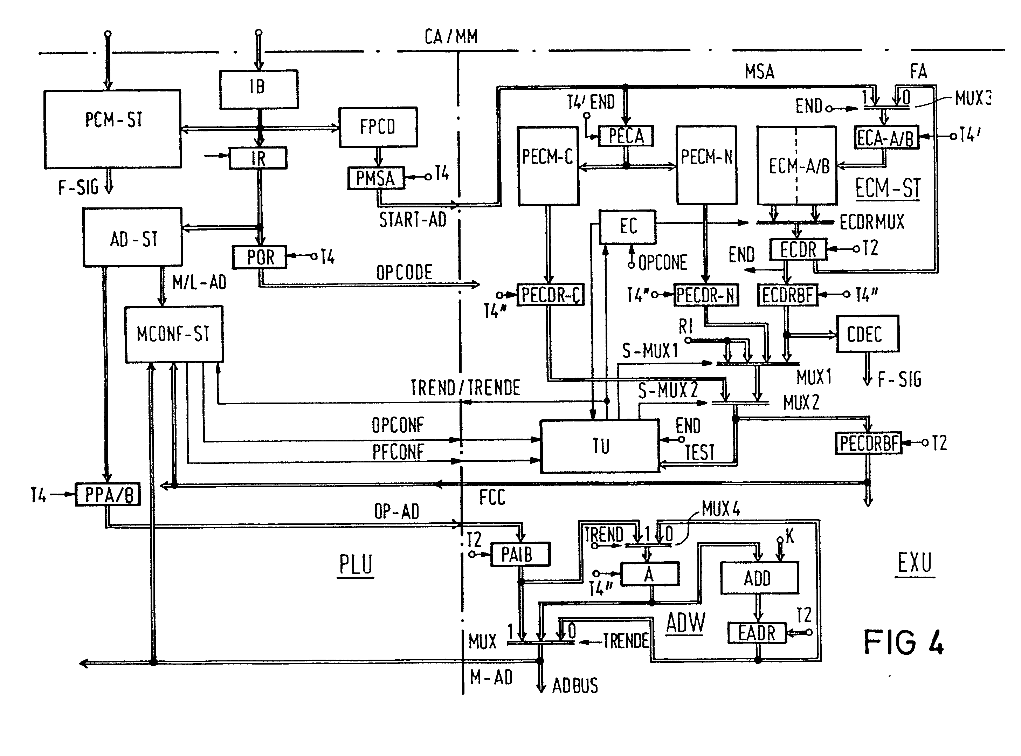

Das erweiterte Blockschaltbild von FIG 4 zeigt in Anlehnung an FIG 3 der deutschen Patentschrift 36 03 230 Teile eines Befehlsaufbereitungsprozessors PLU und eines Befehlsausführungsprozessors EXU mit den für die Erfindung wesentlichen Einrichtungen. Abhängig von einer nicht gezeigten Taktverteileranordnung und der Mikroprogrammsteuerung PCM-ST werden vom Befehlsausführungsprozessor PLU Befehle vom Speichersystem CA/MM in den Befehlspuffer IB gelesen und nacheinander an das Befehlsregister IR weitergeleitet. Gleichzeitig wird im Rahmen der Befehlsinterpretation die Mikroprogrammstartadresse START-AD für den Befehlsaufbereitungsprozessor EXU aus dem Speicher FPCD ermittelt und anschließend im Register PMSA für die Übergabe an den Be fehlsaufbereitungsprozessor EXU bereitgestellt.

Abhängig vom Befehlstyp und von den Adressenhinweisen des im Befehlsregister IR zwischengespeicherten Maschinenbefehls werden von der Adressensteuerung AD-ST die gegebenenfalls benötigten Operandenadressen ermittelt und in Registern PPA/B für die Übergabe an den Befehlsausführungsprozessor EXU bereitgestellt. Ebenso wird der im Befehlsregister IR enthaltene Befehl an ein Folgeregister POR weitergeleitet sowie anhand der berechneten Speicheroperandenadresse ein Operand von maximal 8 Byte Länge im voraus gelesen und in einem nicht dargestellten Register für die Übernahme bereitgestellt.

Weiterhin ist im Befehlsaufbereitsprozessor PLU noch eine Anordnung MCONF-ST für die Überwachung von Konflikten vorgesehen, die möglicherweise auftretende Operandenkonflikte durch Vergleich der von der Adressensteuerung AD-ST gelieferten Operandenleseadresse M/L-AD mit der vom Befehlsausführungsprozessor EXU gelieferten Operanden-Schreibadresse M-AD ermittelt und mit dem Signal OPCONF an den Befehlsausführungsprozessor EXU meldet. Analog dazu wird weiterhin überwacht, ob gegebenenfalls ein falscher Befehl im Voraus gelesen wurde, und dieses mit dem Signal PFCONF angezeigt.

Der Arbeitsablauf im Befehlsausführungsprozessor EXU wird ebenfalls durch eine Mikroprogrammsteuerung ECM-ST in Verbindung mit einem nicht gezeigten Taktverteiler gesteuert. Innerhalb der Mikroprogrammsteuerung sind zwei Mikroprogrammspeicher mit jeweils einem zugehörigen Adressensteuerregister, die jeweils als eine Einheit ECM-A/B bzw. ECA-A/B dargestellt sind, und einem gemeinsamen Leseregister ECDR gezeigt. Beide Adressenregister werden jeweils parallel geladen, entweder mit der Startadresse START-AD aus dem Register PMSA des Befehlsaufbereitungsprozessors PLU oder aus dem gemeinsamen Leseregister ECDR, wie es der Steuerablauf jeweils erfordert, so daß beide Speicher jeweils gleichzeitig angesteuert werden können, aber nur aus einem der Speicher über den Auswahlschalter ECDRMUX die Information in das Leseregister ECDR abhängig von einem entsprechenden Auswahlsignal der Steuerschaltung EC übernommen wird. Dem Leseregister ECDR ist weiterhin ein Pufferregister ECDRBF nachgeschaltet, aus dem der Befehlsdecodierer CDEC für die Erzeugung der Funktionssignale für die Ausführung der jeweils zugehörigen Elementaroperation gespeist wird.

Zusätzlich zu diesem herkömmlichen Aufbau der Mikroprogrammsteuerung, die beispielsweise in den Siemens-Druckschriften U 64068-J und U 68002-J beschrieben ist, sind in Auswirkung der Erfindung neben dem eigentlichen Mikrobe fehlsspeicher ECM-A/B zwei weitere Steuerspeicher PECM-N und PECM-C vorgesehen, die von einem gemeinsamen Adressensteuerregister PECA adressiert werden und denen jeweils ein Leseregister PECDR-N bzw. PECDR-C nachgeschaltet ist.

Beide Steuerspeicher sind im wesentlichen gleich aufgebaut und enthalten je Maschinenbefehl einen über das Adressensteuerregister PECA mit der Startadresse MSA ansteuerbaren Eintrag als frühzeitige Steuerinformation, die für die rechtzeitige Entscheidungsfindung und Parameterbereitstellung benötigt wird. Diese Steuerinformationen bestehen daher aus entsprechenden Teilen der im normalen Mikroprogrammspeicher ECM-A/B enthaltenen Mikrobefehle. Im Prinzip würde ein einziger Steuerspeicher nämlich der Steuerspeicher PECM-N, für die Steuerung gemäß der Erfindung genügen. Im vorliegenden Falle ist jedoch ein zweiter Steuerspeicher PECM-C vorgesehen, dessen Einträge lediglich bei einem Operandenkonflikt für die Ablaufsteuerung herangezogen werden. Die einzelnen Einträge in den beiden Steuerspeichern PECM-N und PECM-C bestehen beispielsweise aus 16 Bits entsprechend der nachfolgenden Darstellung:

|  | 0 | 1 | 2 | 3 | 4-7 | 8-11 | 12-14 | 15 | 16 |
|---|---|---|---|---|---|---|---|---|---|
| PECM-N | WR | RD | LA/RA | PA/B | L | TCFEO | TCSEO | CENDFEO | CENDSEO |

|  | 0 | 1 | 2 | 3 | 4-7 | 8-11 | 12-14 | 15 | 16 |
|---|---|---|---|---|---|---|---|---|---|
| PECM-C | -- | RD | LA/RA | PA/B | L | TCFEO | TCSEO | CENDFEO | CENDSEO |

Die einzelnen Einträge haben folgende Bedeutung:
WR: Schreiben
RD: Lesen
LA/RA: Rechts- oder Linksausrichtung des Operanden
PA/B: Auswahl der Adressenregister PA oder PB der Kombination PA/B
L: Länge des Operanden
TCFEO: Testcode für die erste Elementaroperation FEO eines Maschinenbefehls
TCSEO: Testcode für die zweite Elementaroperation SEO eines Maschinenbefehls
CENDFEO: Bedingtes Ende in der ersten Elementaroperation FEO
CENDSEO: Bedingtes Ende in der zweiten Elementaroperation SEO

Die Struktur der Einträge für beide Speicher unterscheidet sich jeweils nur dadurch, daß im Steuerspeicher PECM-C der Eintrag für einen Schreibbefehl WR fehlt, da bei einem Operandenkonflikt ausschließlich gelesen wird. Die in den Leseregistern PECDR-N bzw. PECDR-C bereitstehenden Steuerinformationen bzw. die entsprechende Steuerinformation aus dem Pufferregister ECDRBF werden nun nach Bedarf abhängig von der Entscheidung der zusätzlichen Überwachungseinrichtung TU an das Steuerregister PECDRBF über die Auswahlschalter MUX1 und MUX2 weitergeleitet und stehen damit für die weitere Ablaufsteuerung zur Verfügung. Die Auswahlmöglichkeiten durch die beiden Auswahlschalter MUX1 und MUX2 sind dabei so getroffen, daß der Auswahlschalter MUX1 zunächst eine Auswahl zwischen dem Leseregister PECDR-N des ersten Steuerspeichers oder dem Pufferregister ECDRBF trifft, während der andere Auswahlschalter MUX2 eine Auswahl zwischen den Ausgang des Leseregisters PECDR-C des zweiten Steuerspeichers und dem Ausgang des anderen Auswahlschalters MUX1 trifft. Das hat den großen Vorteil, daß in Verbindung mit dem zweiten Steuerspeicher PECM-C die Durchschaltezeit bis zum Eingang des Steuerregisters PECDRBF verkürzt und damit Reaktionszeit gewonnen wird. Selbstverständlich könnten bei ausreichenden Zeitbedingungen die beiden Auswahlschalter MUX1 und MUX2 auch in einem Auswahlschalter zusammengefaßt werden.

Für den Fall, daß der Befehlsaufbereitungsprozessor PLU parallel zu einem Operandenkonflikt auch einen Befehlskonflikt erkennt und beide Konflikte mit den Signalen OPCONF und PFCONF dem Befehlsausführungsprozessor EXU meldet, wird anstelle der jeweils bereitgestellten frühzeitigen Steuerinformation über die Auswahlschalter MUX1 und MUX2 unmittelbar der Befehl RI für das erneute Befehlslesen zum Steuerregister PECDRBF durchgeschaltet und damit das notwendige Befehlsnachlesen eingeleitet. Der angezeigte Operandenkonflikt ist in diesem Falle nicht mehr relevant.

Zusätzlich zu der gezeigten erweiterten Mikroprogrammsteuerung ECM-ST des Befehlsausführungsprozessors EXU ist im unteren Teil von FIG 4 das Adressenrechenwerk ADW für die Berechnung und Bereitstellung der jeweiligen Operandenadressen dargestellt. Dieses Adressenrechenwerk besteht analog dem von FIG 1 aus dem eigentlichen Adressenregister A, einem Addierer ADD und einem Zwischenregister EADR. Das Adressenregister A wird zu Beginn eines Maschinenbefehls in üblicher Weise über die Registerkette PPA/B und PA/B mit der Operandenstartadresse OP-AD gespeist. Aus dieser Startadresse errechnet der Addierer ADD des Adressenrechenwerkes durch Addition einer Konstanten K jeweils die gegebenenfalls benötigte Folgeadresse, die im Zwischenregister EADR zwischengespeichert und dann an das Adressenregister A weitergeleitet wird. Außerdem ist sowohl der Ausgang des Übernahmeregisters PA/B als auch der Ausgang des Zwischenregisters EADR über den Auswahlschalter MUX unmittelbar zur Speichersteuerung beim Operandenlesen durchschaltbar.

Die Übernahme der einzelnen Steuerinformationen durch die einzelnen Register erfolgt getaktet mit von den nicht gezeigten Taktverteileranordnungen zu verschiedenen Zeiten einer Elementaroperation gelieferten Taktimpulsen T..., wobei bei Elementaroperationen mit wiederum vier Taktphasen die Taktimpulse T4 für die letzte Taktphase jeweils das Ende einer Elementaroperation einleiten und in der Regel als Bereitstellungstakte die Ausgangsbasis für die nachfolgende Elementaroperation schaffen. Im vorliegenden Falle werden mit den Takten T4 vom Aufbereitungsprozessor PLU insbesondere die Startadressen in den Registern PMSA und PPA/B an der Schnittstelle zum Befehlsausführungsprozessor EXU bereitgestellt und anschließend mit den angegebenen Taktimpulsen vom Befehlsausführungsprozessor EXU weiterverarbeitet.

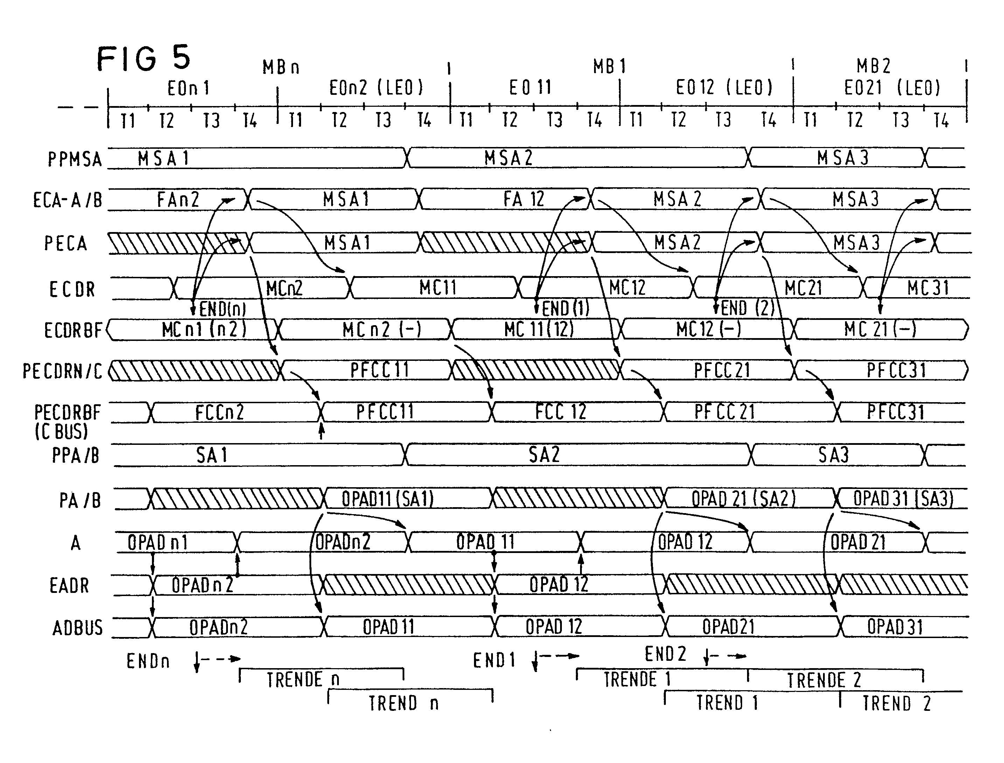

FIG 5 zeigt ein entsprechendes Ablaufdiagramm. Die oberste Zeile zeigt eine Folge von Elementaroperationen für zwei aus zwei Elementaroperationen EOn1 und EOn2 bzw. EO11 und EO12 bestehenden Maschinenbefehlen MBn und MB1 sowie einen aus einer Elementaroperation EO21 bestehenden Maschinenbefehl MB2, wobei die jeweils letzte Elementaroperation eines Maschinenbefehls mit LEO gekennzeichnet ist. Alle Elementaroperationen EO... bestehen aus vier Taktphasen mit den zugehörigen Taktimpulsen T1 bis T4.

Die nachfolgenden Zeilen des Ablaufdiagramms beziehen sich auf die gleichnamig gekennzeichneten Register und Leitungssysteme von FIG 4. Jeweils in der letzten Elementaroperation eines Maschinenbefehls werden die Startadressen MSA... und SA... in den Registern PPMSA bzw. PPA/B bereitgestellt. Jeweils in der vorletzten Elementaroperation vor Beginn eines neuen Maschinenbefehls, z.B. in der Elementaroperation EOn1 in Bezug auf die erste Elementaroperation EO11 des Maschinenbefehls MB1, wird dann in der Taktphase 4 mit einem verzögerten Taktimpuls T4′ die Startadresse MSA1 in die Register ECA-A/B und PECA übernommen, so daß sowohl der Mikrobefehlsspeicher ECM-A/B als auch die Steuerspeicher PECM-N und PECM-C neu adressiert und die entsprechenden Informationen gelesen werden. Noch in derselben Taktphase werden mit einem stärker verzögertem Taktimpuls T4″ die gelesenen Steuerinformationen in die Leseregister PECDR-N bzw. PECDR-C übernommen, während der aus dem Mikrobefehlsspeicher ECM-A/B gelesene zugehörige Mikrobefehl erst in der nachfolgenden Elementaroperation EOn2 mit dem Taktimpuls T2 vom Leseregister ECDR übernommen wird. Erst mit dem nachfolgenden Taktimpuls T4″ steht der Mikrobefehl MC11 zur Steuerung der zugehörigen Elementaroperation EO11 im Pufferregister ECDRBF zur Verfügung. Im Vergleich dazu kann, bedingt durch die phasenverschobene Taktung der Leseregister PECDR-N und PECDR-C der Steuerspeicher PECM-N bzw. PECM-C, bereits eine Elementaroperation früher auf die benötigte Steuerinformation PFCC11 zugegriffen und diese mit dem nachfolgenden Taktimpuls T2 im gemeinsamen Pufferregister PECDRBF für die Ablaufsteuerung bereitgestellt werden, so daß bereits vor Beginn der zugehörigen Elementaroperation EO11 ein Speicherzugriff ausgelöst und der Speicherzugriff noch in der letzten Taktphase derselben Elementaroperation eingeleitet werden kann.

Bei aus jeweils nur einer Elementaroperation bestehenden Maschinenbefehlen werden die benötigten frühzeitigen Steuerinformationen für das Steuerregister PECDRBF nacheinander allein aus den Steuerspeichern PECM-N bzw. PECM-C übernommen, wie der Zeile für dieses Steuerregister bezüglich der Steuerinformationen PFCC21 und PFCC31 für die Maschinenbefehle MB2 und MB3 zu entnehmen ist.

Bei aus mehreren Elementaroperationen bestehenden Maschinenbefehlen wird dagegen die frühzeitige Steuerinformation für die zweite und die weiteren Elementaroperationen desselben Maschinenbefehles, z.B. die Steuerinformation FCC12 für die Elementaroperation EO12 aus dem Mikrobefehl im Mikrobefehlsspeicher ECN-A/B abgeleitet und aus dem Pufferregister ECDRBF übernommen. Dies setzt allerdings voraus, daß der jeweils bereitstehende Mikrobefehl, z.B. MC11, jeweils zusätzlich die benötigte Steuerinformation des nachfolgenden Mikrobefehls, also z.B. MC12, umfaßt, so daß auf diese bereits vorauseilend zugegriffen werden kann, da der Mikrobefehl MC12 mit der aus dem Mikrobefehl MC11 abgeleiteten Folgeadresse FA12 erst später zur Verfügung steht. Der die frühzeitige Steuerinformation liefernde Befehl ist in der Zeile für das Pufferregister ECDRBF neben dem eigentlichen Mikrobefehl in Klammern angegeben. Quellen für die frühzeitigen Steuerinformationen im Steuerregister PECDRBF sind also im Vorlauf zur jeweils ersten Elementaroperation eines Maschinenbefehls die Steuerspeicher PECM-N oder PECM-C und für die weiteren Elementaroperationen eines Maschinenbefehls der Mikrobefehlsspeicher ECM-A/B, was durch entsprechende Pfeile in FIG 5 angedeutet ist.

Um bei Speicherzugriffen auch die notwendige Speicheradresse zeitgleich mit dem Funktionscode aus dem Pufferregister PECDRBF bereitstellen zu können, wird die erst mit dem Phasentakt T2 einer Elementaroperation vom Register PA/B übernommene Startadresse, z.B. SA1, als Operandenadresse OPAD11 unmittelbar auf das Adressenleitungssystem ADBUS durchgeschaltet. Dies trifft für alle aus nur einer Elementaroperation bestehenden Maschinenbefehle mit Speicherzugriff zu. Für die Folge-Elementaroperationen wird dagegen die im Register PA/B gespeicherte Startadresse mit dem nachfolgenden Taktimpuls T4 in das Register A übernommen, so daß nach Erhöhung um eine Konstante K durch den Addierer ADD des Rechenwerkes ADW mit dem Taktimpuls T2 die Folgeadresse im Zwischenregister EADR bereitsteht und von hieraus dem Adressenleitungssystem ADBUS zugeleitet wird.

Wie aus FIG 4 ersichtlich und in FIG 5 durch Pfeile angedeutet ist, erfolgt die Übernahme der jeweils neuen Startadresse MSA... für den Mikrobefehlsspeicher ECM-A/B immer abhängig von dem im Mikrobefehl MC... für die jeweils letzte Elementaroperation LEO eines Maschinenbefehls MB... enthaltenen Steuerbit END, das am Leseregister ECDR abgegriffen wird und daher sehr frühzeitig zur Verfügung steht. Dieses Steuerbit END wird dann in üblicher Weise in Verbindung mit einem vorgegebenen Taktimpuls der nachfolgend ausgeführten zugehörigen Elementaroperation zum das Ende des Maschinenbefehls MB... kennzeichnenden Endesignal TREND, das bei ausreichend langer Zyklusdauer der Elementaroperationen die Umschaltung der Auswahlschalter MUX1, MUX und MUX3 steuern kann, so daß die jeweils benötigte frühzeitige Steuerinformation aus dem Steuerspeicher PECM-N bzw. PECM-C und die Speicheradresse bereits sehr frühzeitig in der letzten Elementaroperation LEO eines Maschinenbefehls im Vorlauf zur zugehörigen ersten Elementaroperation des nachfolgenden Maschinenbefehls verfügbar ist.

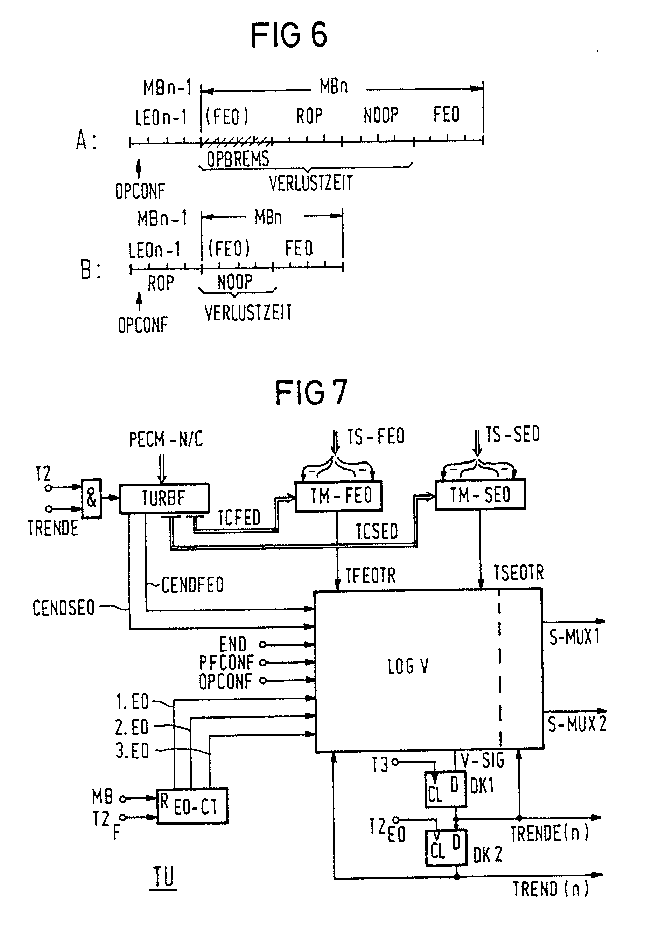

Mit der Anordnung gemäß FIG 4 können aber nicht nur aus einer Elementaroperation bestehende Maschinenbefehle mit Speicherzugriffen ohne leistungsmindernde Verlustzyklen nacheinander ausgeführt werden. Auch Operandenkonflikte lassen sich mit der frühzeitigen Steuerinformation aus den Steuerspeichern günstiger lösen, wie die Gegenüberstellung der Ablaufdiagramme von FIG 6 ergibt. Zeile A zeigt in Anlehnung an FIG 2 der DE-PS 36 03 240 eine Folge von Elementaroperationen bei der Behandlung von Operandenkonflikten. Wird zum Beispiel in der letzten Elementaroperation LEO eines Maschinenbefehls ein Operandenkonflikt OPCONF festgestellt, dann kommt die normalerweise als nächste folgende erste Elementaroperation FEO des nächsten Maschinenbefehls MBn nicht zur Ausführung, sondern der Ausführungsprozessor EXU wird für die Dauer einer Elementaroperation gebremst und der Mikrobefehl für die Konfliktbereinigung in einem anderen Zweig des Mikrobefehlsspeichers ECM-A/B adressiert und gelesen. Danach wird das Lesen des Operanden ROP ausgeführt und eine weitere Elementaroperation NOOP gewartet, bis der Operand im Befehlsausführungsprozessor EXU eingetroffen ist. Bevor also die eigentliche erste Elementaroperation FEO des neuen Maschinenbefehls MBn ausgeführt werden kann, vergehen somit drei Elementaroperationen, die eine erhebliche Leistungsminderung mit sich bringen.

Aufgrund der frühzeitig verfügbaren Steuerinformation aus dem Steuerspeicher kann dagegen das Lesen des Operanden gemäß Zeile B von FIG 6 bereits in der letzten Elementaroperation LEO des Maschinenbefehls MBn-1 eingeleitet werden, und es braucht lediglich eine Elementaroperation NOOP gewartet zu werden, bis der Befehlsausführungsprozessor EXU die erste Elementaroperation FEO des neuen Maschinenbefehls MBn ausführen kann. Die Einsparung von zwei Verlust-Elementaroperationen führt gerade bei häufig auftretenden Operandenkonflikten zu einer erheblichen Leistungssteigerung.

Die für das Nachlesen des Operanden benötigte Steuerinformation kann aus einem einheitlichen Steuerspeicher PECM-N entnommen werden. Die Steuerung gestaltet sich jedoch einfacher und er fordert kürzere Durchschaltezeiten, wenn für die Konfliktsteuerung ein zweiter Steuerspeicher PECM-C, wie in FIG 4 dargestellt, verwendet wird, da dann die Auswahl in einfacherer Weise durch das den Operandenkonflikt anzeigende Steuersignal OPCONF gesteuert werden kann, was noch näher erläutert wird.

Die frühzeitige Bereitstellung der benötigten Steuerinformationen aus den Steuerspeichern ist aber nur möglich, wenn das Ende eines Maschinenbefehls frühzeitig erkannt wird. Bei Maschinenbefehlen mit unbedingtem Ende kann das Endesignal mit einem nachfolgenden Taktimpuls noch in derselben oder aber bei ausreichender Zyklusdauer auch noch im ersten Teil der nächsten, nämlich der letzten Elementaroperation eines Maschinenbefehls, unmittelbar vom Steuerbit END abgeleitet werden.

Entscheidend ist dabei allein die rechtzeitige Verfügbarkeit in der letzten Elementaroperation LEO vor Beginn eines neuen Maschinenbefehls. Abhängig von der zur Verfügung stehenden Zyklusdauer der einzelnen Elementaroperationen kann daher auch eine andere Taktung der Adressen- und Leseregister für die Mikroprogrammsteuerung ECM-ST gewählt werden. Auch können anstelle des gemeinsamen Bereitstellungsregisters PECDRBF in FIG 4 die Leseregister PECDR-N und PECDR-C sowie das Pufferregister ECDRBF ähnlich wie bei der Anordnung von FIG 1 unmittelbar als Bereitstellungsregister für die Ablaufsteuerung dienen, die alle mit dem gleichen frühen Taktimpuls, z.B. T2, getaktet werden und deren Ausgänge dann ausgewählt zu den Leitungssystemen durchgeschaltet werden.

Vielfach ist jedoch die Befehlsausführungszeit und damit die Anzahl der für einen Maschinenbefehl benötigten Elementaroperationen nicht vorhersehbar, so daß bei solchen Mikrobefehlen mit parameterabhängigem, bedingtem Ende erst pogrammgesteuert nach Erfüllung vorgegebener Tests in einen Mikrobfehl mit mikroprogrammierten unbedingtem Steuerbit END über geleitet werden muß. Das bedeutet bei aus nur einer oder zwei Elementaroperationen bestehenden Maschinenbefehlen zusätzliche Verlust-Elementaroperationen für die Programmverzweigung in einen Mikrobefehl mit unbedingtem Ende.

Auch diese durch Maschinenbehle mit bedingtem Maschinenbefehlsende verursachten Verlustzyklen lassen sich gemäß einer Weiterbildung der Erfindung umgehen, wenn man den Steuerungsablauf so gestaltet, daß das tatsächliche Ende des Maschinenbefehls rechtzeitig erkannt und entsprechend frühzeitig auf den jeweils benötigten ersten Mikrobfehl des Maschinenbefehls umgesteuert werden kann. Diese Entscheidung trifft die in FIG 4 gezeigte und in FIG 7 ausführlicher dargestellte zusatzliche Überwachungseinrichtung TU anhand der von der frühzeitigen Steuerinformation der Steuerspeicher abgeleiteten Testinformationen TEST, die jeweils in das Register TURBF übernommen und bis zum nächsten, das Ende des zugehörigen Maschinenbefehls kennzeichnenden frühen Endesignal TRENDE zwischengespeichert bleiben. Diese Testinformationen bestehen aus zwei Steuerbits CENDFEO und CENDSEO, die das im Mikrobefehl für die jeweils erste Elementaroperation FEO bzw. die jeweils zweite Elementaroperation SEO eines Maschinenbefehls vorhandene Steuerbit END als bedingt kennzeichnen, und den zugehörigen Testcode TCFEO bzw. TCSEO. Mit dem Testcode TCFEO für die erste Elementaroperation FEO eines Maschinenbefehls wird jeweils eine erste Testmaske TM-FEO und mit dem Testcode TCSEO für die zweite Elementaroperation SEO eines Maschinenbefehls jeweils eine zweite Testmaske TM-SEO beaufschlagt, um die durch Zustandssignale TS-FEO bzw. TS-SEO angezeigten Ablaufzustände zu überprüfen. Sind die vorgegebenen Testbedingungen erfüllt, erzeugen die Testmasken TM-FEO bzw. TM-SEO die Signale TFEOTR bzw. TSEOTR, die in einer logischen Verknüpfungsschaltung LOGV mit den Steuerbits END, CENDFEO und CENDSEO sowie mit den Signalen OFCONF für die Anzeige eines Operandenkonflikts und 1.EO bis 3.EO eines die Anzahl der ab Beginn eines jeden Maschinenbefehls nacheinander eingeleiteten Elementaroperationen kennzeichnenden Zählers EO-CT verknüpft werden. Dieser Zähler wird daher mit Beginn eines jeden Maschinenbefehls rückgesetzt und mit dem Taktimpuls T2 einer jeden Elementaroperation fortgeschaltet.

Das von der logischen Verknüpfungsschaltung LOGV erzeugte Steu ersignal V-SIG wird dann mit den Taktimpulsen T3 bewertet und die bistabile Kippstufe DK1 zur Erzeugung des frühen Endesignales TRENDE für eine Zyklusdauer gesetzt. Von diesem frühen Endesignal wird dann in analoger Weise durch Setzen der nachgeschalteten bistabilen Kippstufe DK2 mit dem nachfolgenden Taktimpuls $T2_{EO}$, der nur bei Ausführung eines Mikrobefehles wirksam wird, das Endesignal TREND abgeleitet. Im Ablaufdiagramm von FIG 5 sind diese Signa in ihrem zeitlichen Ablauf mit Bezug auf die zugrundegelegte Maschinenbefehlsfolge in der letzten Zeile wiedergegeben.

Das Steuersignal V-SIG der logischen Verknüpfungsschaltung LOG-V wird nach folgenden logischen Beziehungen ermittelt:

```
I  V-SIG_n =   (OPCONF & CENDFEO & CENDSEO & END)
II          V (OPCONF & CENDFEO &· CENDSEO & END)


   A        V (OPCONF & CENDFEO & TREND(n-1) & TFEOTR      & END(n)
   B        V (OPCONF & CENDFEO & 1.EO(n)    & TFEOTR      & END(n)
   C        V (OPCONF & CENDFEO & 1.EO(n)    & TREND(n-1)  & END(n)
   D        V (OPCONF & CENDFEO & 2.EO(n)    & TREND(n-1)  & END(n)
   E        V (OPCONF & CENDSEO & 1.EO(n)    & TSEOTR      & END(n)
   F        V (OPCONF & CENDSEO & 2.EO(n)    & TSEOTR      & END(n)
   G        V (OPCONF & CENDSEO & 2.EO(n)    & TREND(n-1)  & END(n)
   H        V (OPCONF & CENDSEO & 3.EO(n)    & TREND(n-1)  & END(n)


   III      V (CENDFEO & INHCENDFEO & CENDSEO & INHCENDSEO & END)


mit
INHCENDFEO =   (OPCONF & TREND & 1.EO)
           V (OPCONF & TREND & 1.EO & 2.EO)


und
INHCENDSEO =   (OPCONF & TREND & 1.EO & 2.EO)
           V (OPCONF & TREND & 1.EO & 2.EO & 3.EO)
```

Die Teilbeziehungen gemäß den Teilen I und II beziehen sich auf Maschinenbefehle mit unbedingtem Ende, d.h. beide Steuerbits CENDFEO und CENDSEO sind nicht gesetzt. Das auftretende Steuerbit END führt daher unmittelbar zum Signal V-SIG = 1. Die Anzeige eines Operandenkonflikts mit dem Signal OPCONF = 1 bewirkt nur, daß der das Steuerbit führende Mikrobefehl gemäß FIG 6, Zeile B, um eine Zyklusdauer verzögert zur Ausführung gelangt.

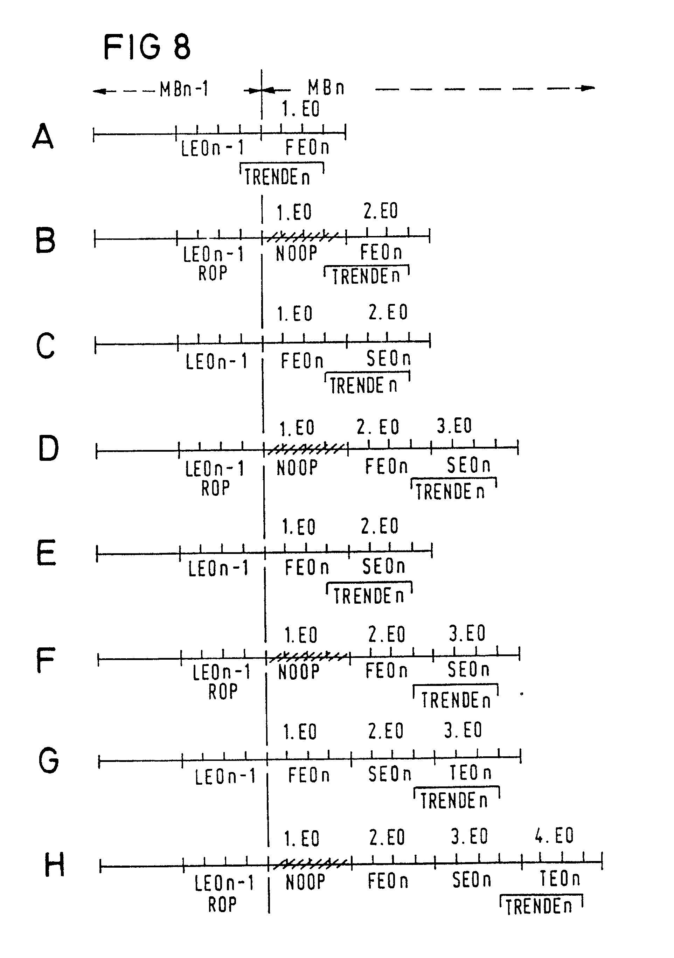

Die weiteren Teilbeziehungen gemäß den Zeilen A bis H beziehen sich auf Maschinenbefehle mit bedingtem Ende in der ersten oder zweiten Elementaroperation FEO oder SEO eines Maschinenbefehls. Die zugehörigen Ablauffolgen sind in FIG 8 wiedergegeben und die einander entsprechenden Fälle mit demselben Zeilenbuchstaben gekennzeichnet. Daraus wird ersichtlich, daß abgesehen von der Verlängerung des Maschinenbefehles MBn um eine Elementaroperation bei einem Operandenkonflikt bei nichterfüllter Bedingung immer eine Verlängerung um eine weitere Elementaroperation eintritt. Ein aus zwei Elementaroperationen bestehender Maschinenbefehl wird also maximal um zwei Elementaroperationen auf insgesamt vier Elementaroperationen verlängert, wobei das tatsächliche Ende des laufenden Maschinenbefehls MBn anhand des frühen Endesignales TRENDEn zeitgerecht mit dem benötigtem Vorlauf erkannt wird.

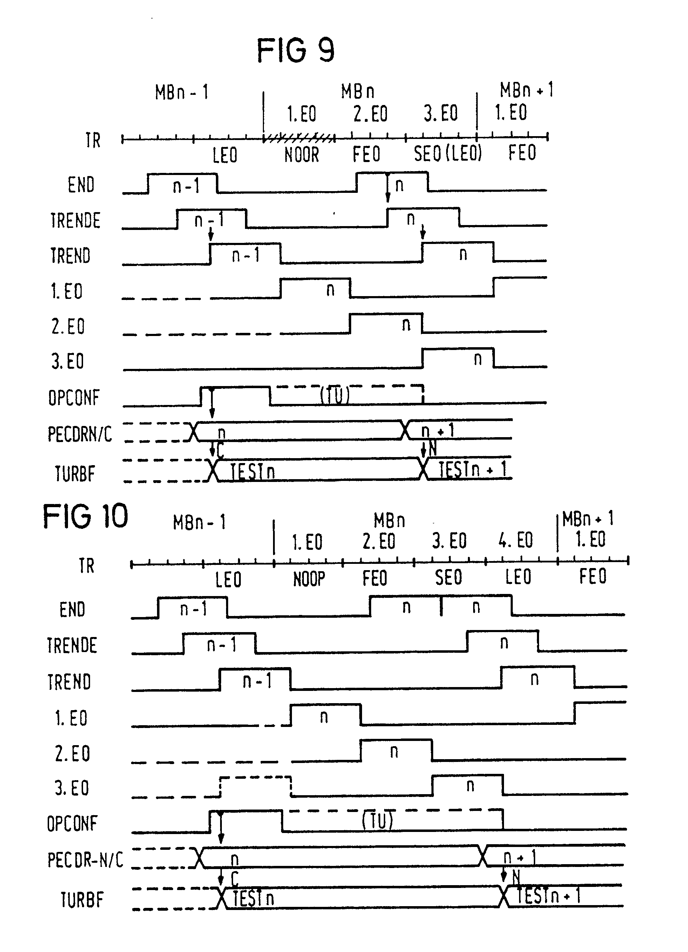

FIG 9 und FIG 10 zeigen den Ablauffolgen bei angezeigtem Operandenkonflikt mit OPCONF = 1 und erfüllter bzw. nichterfüllter Endebedingung in der zweiten Elementaroperation SEO gemäß den Zeilen F und H von FIG 5 entsprechende vollständige Ablaufdiagramme.

Die Elementaroperation, in der das frühe Endesignal TRENDEn erzeugt wird, ergibt sich bei den logischen Teilbeziehungen gemäß den Zeilen A bis H aus der jeweils dritten Verknüpfungsgröße, während die vierte Verknüpfungsgröße berücksichtigt, ob die Testbedingungen erfüllt sind oder nicht. Dabei wird bei nicht erfüllter Testbedingung nicht das Signal TFEOTR bzw. TSEOTR berücksichtigt, sondern das Signal TREND(n-1), um zu verhindern, daß das frühe Endesignal TRENDEn zu früh ausgelöst wird. Wie nämlich aus FIG 10 ersichtlich werden die Testbedingungen TESTn für den Maschinenbefehl MBn bereits in der ersten Hälfte der letzten Elementaroperation LEO des Maschinenbefehls MBn-1 wirksam, so daß in dieser letzten Elementaroperation die für den Maschinenbefehl MBn zu erfüllende Verknüpfungsbedingung ebenfalls bereits erfüllt sein könnte. Das gleichzeitig noch wirksame Signal TREND(n-1) = 1 verhindert in diesem Falle die vorzeitige Auslösung des frühen Endesignals TRENDEn.

Zeile III der Verknüpfungsgleichung für das Steuersignal V-SIG stellt sicher, daß bei Überleitung in eine Fehlerroutine oder dergleichen während eines laufenden Maschinenbefehls mit bedingtem Ende die durch die Steuerbits CENDFEO bzw. CENDSEO bewirkte bedingte Endekennzeichung nach Ablauf der maximal zulässigen Anzahl von Elementaroperationen, was durch die Zwischenverknüpfungsgrößen INHCENDFEO bzw. INHCENDSEO angezeigt wird, wieder aufgehoben und die weitere Steuerung wiederum allein vom unbedingtem Steuerbit END der eingeleiteten Routine abhängig wird.

Analoges gilt für längere, aus mehr als zwei Elementaroperationen bestehenden Maschinenbefehlen, bei denen die Anzahl der erforderlichen restlichen Elementaroperationen bis zum Ende des Maschinenbefehls in herkömmlicher Weise mit unbedingtem Ende mikroprogrammiert in ausreichendem Vorlauf zur letzten Elementaroperation ermittelt wird.

Abhängig vom frühen Endesignal TRENDE erfolgt dann die Einstellung der Auswahlschalter MUX1 und MUX2 durch die Steuersignale S-MUX1 bzw. S-MUX2 nach folgendem Schema:

| PCONF | OPCONF | TRENDE | S-MUX | | Quelle | |
|---|---|---|---|---|---|---|
| | | | 1 | 2 | ECM-ST | ADW |
| 1 | X | X | 1/X | 0 | RI | - |
| 0 | 0 | 1 | 0/1 | 0 | PECM-N | PA |
| 0 | 0 | 0 | 0/0 | 0 | ECM-A/B | EADR |
| 0 | 1 | 1 | X/X | 1 | PECM-C | PB |

Im Falle eines Befehls-Vorauslesefehlers PFCONF = 1 gemäß der ersten Kombinationszeile ist ein möglicherweise auftretender Operandenkonflikt nicht mehr beachtlich, da bereits ein falscher Befehl im voraus gelesen wurde. In diesem Falle wird das Signal OPCONF unterdrückt und über den Auswahlschalter MUX1 der direkt anliegende Befehlscode RI für ein erneutes Befehlslesen zum Befehlsaufbereitungsprozessor PLU durchgeschaltet, während der Befehlsausführungsprozessor EXU in herkömmlicher Weise gebremst wird.

Wird dagegen nur ein Operandenkonflikt OPCONF = 1 gemäß der letzten Kombinationszeile angezeigt, so ist die Bitkombination für das Steuersignal S-MUX1 uninteressant, und es wird bei gleichzeitigem Endesignal TRENDE = 1 unmittelbar mit dem Steuersignal S-MUX2 = 1 auf die Steuerinformation aus dem zweiten Steuerspeicher PECM-C für die Konfliktbereinigung umgeschaltet und die zugehörige Speicheradresse dem Register PB für das Adressenrechenwerk ADW entnommen.

Die beiden anderen Kombinationszeilen gelten für den konfliktfreien Betrieb, wobei die zweite Zeile jeweils mit Bezug auf die jeweils erste Elementaroperation eines Maschinenbefehls und die dritte Zeile jeweils mit Bezug auf alle weiteren Elementaroperationen eines Maschinenbefehls gilt, d.h. die frühe Steuerinformation wird für die erste Elementaroperation immer dem Steuerspeicher PECM-N und für alle übrigen Elementaroperationen vom Mikrobefehlsspeicher ECM-A/B abgeleitet. Analoges gilt für die gegebenenfalls benötigten Speicheradressen, für die zunächst das Register PA und anschließend das Zwischenregister EADR des Adressenrechenwerks ADW als Quelle dient.

**Ansprüche**

1. Verfahren zur Steuerung des zeitgerechten Entscheidungsablaufes und der Parameterbereitstellung bei mikroprogrammgesteuerten Maschinenbefehlsabläufen, bei denen die Maschinenbefehle (MB...) jeweils eine oder mehrere Elementaroperationen (EO...) auslösen und mit jedem Maschinenbefehl (MB...) die Startadressen (MSA..., SA...) für einen die Mikrobefehle für die einzelnen Elementaroperationen (EO...) enthaltenden Mikrobefehlsspeicher (ECM) und für ein Adressenrechenwerk (ADW) zur Lieferung der gegebenenfalls notwendigen Speicheroperandenadresse (M-AD) bereitgestellt und abhängig von einem die Ausführungen der letzten Elementaroperation (LEO) für den vorangehenden Maschinenbefehl kennzeichnenden Steuersignal (END) wirksam werden, wobei anhand der Startadressen bzw. der daraus ableitbaren Folgeadressen (FA) jeweils im Vorlauf zur auszuführenden Elementaroperation der zugehörige Mikrobefehl aus dem Mikrobefehlsspeicher (ECM) gelesen und eine gegebenenfalls benötigte Speicheroperandenadresse (N-AD) berechnet wird, so daß diese zeitgerecht zu Beginn der auszuführenden zugehörigen Elementaroperation für die Steuerung bereitstehen,
**dadurch gekennzeichnet,** daß bei nicht ausreichender Dauer der Elementaroperationen (EO...) für die zeitgerechte Herbeiführung von den Fortgang des Steuerungsablaufes durch aufeinanderfolgende Elementaroperationen beeinflussenden Entscheidungen oder für die Bereitstellung benötigter Parameter der für die Entscheidungen bzw. die Parameterbereitstellung benötigte Teil des Mikrobefehles für die jeweils erste Elementaroperation (FEO) eines Maschinenbefehles (z.B. MBn) unmittelbar nach Freigabe der Startadresse (MSAn) jeweils vor Beginn der letzten Elementaroperation (LEO) des vorhergehenden Maschinenbefehls (MBn-1) aus einem gesonderten Steuerspeicher (PECM-N) gelesen und mit einem ausreichend frühen Phasentakt (z.B. T2) der letzten Elementaroperation (LEO) in einem Pufferregister (z.B. PECDRBF) im Vorlauf zu dem aus dem Mikrobefehlsspeicher (ECM) gelesenen und erst später zur Ver fügung stehenden vollständigen Mikrobefehl für die Ablaufsteuerung zur Verfügung gestellt wird.

2. Verfahren nach Anspruch 1,
**dadurch gekennzeichnet**, daß bei aus mehreren Elementaroperationen bestehenden Maschinenbefehlen der mit der Startadresse (MSA...) bzw. Folgeadresse (FA) angesteuerte Mikrobefehlsspeicher (ECM) neben dem jeweils zugehörigen Mikrobefehl zugleich den für die Entscheidungen bzw. die Parameterbereitstellung benötigten Teil des gegebenenfalls folgenden Mikrobefehls liefert, der unabhängig von dem erst später die Ausführung der zugehörigen Elementaroperationen übernehmenden vollständigen Mikrobefehl im Vorlauf dazu in der vorhergehenden Elementaroperation mit dem gleichen Phasentakt (T2) wie die entsprechenden Teile aus dem Steuerspeicher (PECM-N) in einem Pufferregister (z.B. PECDRBF) für die Ablaufsteuerung zur Verfügung gestellt wird.

3. Verfahren nach Anspruch 1 oder 2,
**dadurch gekennzeichnet**, daß zur zeitgerechten Bereitstellung der für Speicherzugriffe neben dem im Pufferregister (z.B. PECDRBF) bereitstehenden Funktionscode (FCC) aus dem Steuerspeicher (PECN-N) oder aus dem Mikrobefehlsspeicher (ECM) benötigten Speicheradresse (M-AD) die nach ihrer Bereitstellung mit dem entsprechenden frühen Phasentakt (T2) in ein das Adressenrechenwerk (ADW) speisendes Register (PA) übernommene Startadresse (SA) unter Umgehung des Adressenrechenwerkes (ADW) unmittelbar und im Vorlauf zur ersten Elementaroperation (FEO) eines Maschinenbefehles (MB...) und nachfolgend für weitere Elementaroperationen (z.B. SEO, TEO) desselben Maschinenbefehles die vom Adressenrechenwerk (ADW) nacheinander errechneten und zeitgerecht zwischengespeicherten Folgeadressen für die Ablaufsteuerung zur Verfügung gestellt werden.

4. Verfahren nach einem der Ansprüche 1 bis 3,
**dadurch gekennzeichnet**, daß die aus dem Steuerspeicher (PECM-N) und dem Mikrobefehlsspeicher (ECM) ge lesenen frühzeitigen Steuerinformationen in individuellen, mit demselben frühen Phasentakt (z.B. T2) getakteten Pufferregistern zur Auswahl für die Ablaufsteuerung bereitgestellt werden.

5. Verfahren nach einem der Ansprüche 1 bis 3,
**dadurch gekennzeichnet**, daß die jeweils benötigte frühzeitige Steuerinformation unter den aus dem Steuerspeicher (PECN-N) und dem Mikrobefehlsspeicher (ECM) gelesenen frühzeitigen Steuerinformationen ausgewählt in ein für alle Speicher gemeinsames Pufferregister (PECDRBF) mit einem frühen Phasentakt (z.B. T2) zur Bereitstellung für die Ablaufsteuerung übernommen wird.

6. Verfahren nach Anspruch 4 oder 5,
**dadurch gekennzeichnet**, daß die Auswahl der jeweils zuständigen Steuerinformation und der gegebenenfalls benötigten Speicheradresse (M-AD) durch ein in der letzten Elementaroperation (LEO) eines Maschinenbefehls (MB...) erzeugtes Endesignal (TREND) erfolgt.

7. Verfahren nach Anspruch 4 oder 5,
**dadurch gekennzeichnet** , daß die Auswahl der jeweils zuständigen frühzeitigen Steuerinformation und der gegebenenfalls benötigten Speicheradresse (M-AD) durch ein bereits vor Beginn der letzten Elementaroperation (LEO) eines Maschinenbefehls (MB...) im Vorlauf zum Endesignal (TREND) erzeugtes frühes Endesignal (TRENDE) erfolgt.

8. Verfahren nach Anspruch 7,
**dadurch gekennzeichnet**, daß das frühe Endesignal (TRENDE) bei Maschinenbefehlen mit unbedingtem Ende unmittelbar von einem im Mikrobefehl für die letzte Elementaroperation (LEO) enthaltenden Steuerbit (END) unmittelbar nach Lesen dieses Mikrobefehls aus dem Mikrobefehlsspeicher (ECM) in Verbindung mit einem nachfolgenden Phasentakt in derselben Elementaroperation abgeleitet wird.

9. Verfahren nach Anspruch 7,
**dadurch gekennzeichnet**, daß bei Maschinenbefehlen mit parameterabhängigem, bedingtem Befehlsende das frühe Endesignal (TRENDE) bei aus einer oder zwei Elementaroperationen bestehenden Maschinenbefehlen abhängig von zusätzlichen Steuerinformationen aus dem Steuerspeicher (PECM) zur Kennzeichnung der den Maschinenbefehl möglicherweise beendenden ersten oder zweiten Elementaroperation (Steuerbit CENDFEO bzw. CENDSEO) und der zugehörigen zu erfüllenden Testbedingungen (TCFEO bzw. TCSEO) bei erfülltem Test in Verbindung mit einem nachfolgenden Phasentakt (T3) der der gekennzeichneten

13

EP 0 398 371 A2

Elementaroperation (FEO bzw. SEO) vorausgehenden Elementaroperation und bei nichterfülltem Test mit dem gleichen Phasentakt (T3) der gekennzeichneten Elementaroperation (FEO bzw. SEO) im Vorlauf zur nachfolgenden tatsächlichen letzten Elementaroperation erzeugt wird, und daß dagegen bei aus mehr als zwei Elementaroperationen bestehenden Maschinenbefehlen die Anzahl der erforderlichen restlichen Elementaroperationen bis zum Ende des Maschinenbefehls in herkömmlicher Weise mit unbedingtem Ende mikroprogrammiert in ausreichendem Vorlauf zur letzten Elementaroperation ermittelt und das frühzeitige Endesignal (TRENDE) davon abhängig erzeugt wird.

10. Verfahren nach einem der Ansprüche 4 bis 9,
**dadurch gekennzeichnet**, daß bei einem angezeigten Operandenkonflikt (OPCONF) anhand der aus dem Steuerspeicher bereitstehenden frühen Steuerinformation und der zugehörigen Speicheradresse (M-AD) das Nachlesen des Operanden aus dem Speicher unmittelbar veranlaßt und die nachfolgend zur Ausführung anstehende erste Elementaroperation (FEO) des neuen Maschinenbefehls um eine Elementaroperation verzögert wird.

11. Verfahren nach Anspruch 10,
**dadurch gekennzeichnet**, daß bei Operandenkonflikten (OPCONF) die frühzeitige Steuerinformation einem, jeweils gleichzeitig mit dem ersten Steuerspeicher (PECM-N) durch die jeweils bereitgestellte Startadresse (MSA...) angesteuerten zweiten Steuerspeicher (PECM-C) entnommen wird.

12. Schaltungsanordnung zur Steuerung von mikroprogrammierten Maschinenbefehlsabläufen in Datenverarbeitungsanlagen, bestehend
- aus zwei Bereitstellungsregistern (PMSA, PPA) für die aus einem Maschinenbefehl (MB...) abgeleiteten Startadressen (MSA..., OPAD...),
- aus einem Mikrobefehlsspeicher (ECM) mit einem Leseregister (ECDR) und einem Adressenregister (ECA) zur wahlweisen Übernahme der Startadresse (MSA...) aus dem Bereitstellungsregister (PMSA) oder der Folgeadresse (FA) aus dem Leseregister (ECDR),
- aus einem Adressenrechenwerk (ADW), bestehend aus einem Adressenregister (A) und einem Addierer (ADD) mit nachgeschaltetem Zwischenregister (EADR) zur Übernahme der Folgeadresse (z.B. OPAD12), wobei dem Adressenrechenwerk (ADW) ein vom Bereitstellungsregister (PPA) ansteuerbares Register (PA) zur Übernahme der Startadresse (SA) vorgeschaltet und das Adressenregister (A) wahlweise mit dem übernahmeregister (PA) oder mit dem Zwischenregister (EADR) koppelbar ist,
**gekennzeichnet**
- durch einen parallel zum Mikrobefehlsspeicher (ECM) vorgesehenen, jeweils nur den für die Entscheidungen und die Parameterbereitstellung benötigten Teil des Mikrobefehls der jeweils ersten Elementaroperationen (FEO) eines Maschinenbefehls (MB...) enthaltenden Steuerspeicher (PECM-N) mit Leseregister (PECDRN), der mit der jeweils bereitgestellten und in ein zugehöriges Adressenregister (PECA) ebenfalls übernommenen Startadresse (MSA) ansteuerbar ist, und
- durch zwei jeweils rechtzeitig gegen Ende eines Maschinenbefehls umsteuerbare Auswahlschalter (MUX1, MUX) zur Weiterleitung der im Leseregister (PECDRN) des Steuerspeichers (PECM-N) vorhandenen Steuerinformation (z.B. FCC...) anstelle der vom aus dem Mikrobefehlsspeicher (ECM) gelesenen Mikrobefehl abgeleiteten Steuerinformation und zur Weiterleitung der im Übernahmeregister (PA) vorhandenen Adresse anstelle der aus dem Zwischenregister (EADR) das Adressenrechenwerks (ADW) an die Ablaufsteuerung.

13. Schaltungsanordnung nach Anspruch 12,
**dadurch gekennzeichnet**, daß dem Leseregister (ECDR) des Mikrobefehlsspeichers (ECM) ein Pufferregister (ECDRBF) nachgeschaltet ist, das mit dem gleichen Phasentakt wie das Leseregister (PECDR-N) des Steuerspeichers (PECM-N) getaktet wird.

14. Schaltungsanordnung nach Anspruch 13,
**dadurch gekennzeichnet**, daß der gleiche Phasentakt ein früher Phasentakt (z.B. T2) der Elementaroperation (EO) ist, der die Registerinhalte für die Ablaufsteuerung freigibt, während das Leseregister des Mikrobefehlsspeichers (ECM) mit einem späten Phasentakt (z.B. T4) getaktet wird, so daß von diesem aus die Durchführung der nachfolgenden zugehörigen Elementaroperation und die Endeüberwachung der einzelnen Maschinenbefehle gesteuert wird, während mit dem frühen Phasentakt (T2) bereits die für den nachfolgenden Mikrobefehl gültige Steuerinformation in das Pufferregister übernommen wird.

15. Schaltungsanordnung nach Anspruch 13,
**dadurch gekennzeichnet**, daß der gleiche Phasentakt ein später Takt (z.B. T4$''$) der Elementaroperation (EO...) ist und daß die Steuerinformation des jeweils durch den Auswahlschalter (MUX1) ausgewählten gleichgetakteten Registers (ECDRBF oder PECDRN) durch Übernahme mit dem frühen Phasentakt (T2) in ein gemeinsames Pufferregister (PECDRBF) für die Ablaufsteuerung freigegeben wird.

16. Schaltungsanordnung nach einem der Ansprüche 12 bis 15,

14

**dadurch gekennzeichnet,** daß parallel zum Steuerspeicher (PECM-N) ein zweiter Steuerspeicher (PECM-C) mit Leseregister (PECDRC) vorgesehen ist, der in gleicher Weise wie der erste Steuerspeicher (PECM-N) aus dem bereits vorhandenen Adressenregister (PECA) adressiert wird, und daß für die Weiterleitung der Steuerinformation aus dem zweiten Steuerspeicher (PECM-C) ein weiterer Auswahlschalter (MUX2) vorgesehen ist, der bei Vorliegen eines Operandenkonfliktes statt der über den Ausgang des anderen Auswahlschalters (MUX1) gelieferten Steuerinformation aus den anderen Speichern (PECM-N oder PECM) die des zweiten Steuerspeichers (PECM-C) weiterleitet.

17. Schaltungsanordnung nach Anspruch 12 oder 12 und 16,

**dadurch gekennzeichnet,** daß die Steuerinformation der Steuerspeicher neben dem notwendigen Funktionscode (FCC) auch Testcodes für die ersten beiden Elementaroperationen (FEO, SEO) eines Maschinenbefehls (MB) mit einem parameterabhängigen Befehlsende umfassen und daß mit dem Ausgang des gemeinsamen Pufferregisters (PECDRBF) eine Überwachungseinrichtung (TU) für die Endeüberwachung eines jeden Maschinenbefehls gekoppelt ist, die die Umsteuersignale (S-MUX1, S-MUX2, TRENDE, TREND) für die jeweils betroffenen Auswahlschalter (MUX1, MUX2, MUX) und die für die Ablaufsteuerung notwendigen Signale liefert.

18. Schaltungsanordnung nach Anspruch 17,

**dadurch gekennzeichnet,** daß die Endeüberwachungsschaltung (TU) aus zwei Testmasken (TM-FEO, TM-SEO) für die Überprüfung auf Einhaltung der durch den Testcode vorgegebenen Bedingungen für die erste bzw. zweite Elementaroperation (FEO bzw. SEO), einem Zähler (EO-CT) für die Kennzeichnung der ersten, der zweiten und der dritten Elementaroperation (FEO, SEO, TEO) eines Maschinenbefehls und aus einer logischen Verknüpfungsschaltung (LOGV) zur Erzeugung des frühen Endesignales (TRENDE) und der davon abhängigen Steuersignale abhängig vom Erkennen einer letzten Elementaroperation (LEO) und der Einhaltung der Testbedingungen unter Berücksichtigung möglicher Konfliktsituationen (OPCONF, PFCONF) besteht.

FIG 1

# FIG 2

EP 0 398 371 A2

FIG 3

FIG 4

EP 0 398 371 A2

FIG 5

EP 0 398 371 A2

MBn     MB1     MB2

EOn1    EOn2 (LEO)    EO11    EO12 (LEO)    EO21 (LEO)

T1 T2 T3 T4 | T1 T2 T3 T4 | T1 T2 T3 T4 | T1 T2 T3 T4 | T1 T2 T3 T4

PPMSA   MSA1    MSA2    MSA3

ECA-A/B   FAn2   MSA1   FA12   MSA2   MSA3

PECA   MSA1   MSA2   MSA3

ECDR   MCn2   MC11   MC12   MC21   MC31

ECDRBF   MCn1 (n2)   MCn2 (−)   MC11(12)   MC12 (−)   MC21 (−)

END(n)   END(1)   END (2)

PECDRN/C   PFCC11   PFCC21   PFCC31

PECDRBF (C BUS)   FCCn2   PFCC11   FCC12   PFCC21   PFCC31

PPA/B   SA1   SA2   SA3

PA/B   OPAD11 (SA1)   OPAD21 (SA2)   OPAD31 (SA3)

A   OPADn1   OPADn2   OPAD11   OPAD12   OPAD21

EADR   OPADn2   OPAD12

ADBUS   OPADn2   OPAD11   OPAD12   OPAD21   OPAD31

ENDn   END1   END2

TRENDE n   TRENDE 1   TRENDE 2

TREND n   TREND 1   TREND 2

# FIG 6

A:

MBn-1 ├──────────────── MBn ────────────────┤

LEOn-1 |(FEO) ROP NOOP FEO

OPBREMS

VERLUSTZEIT

OPCONF

B:

MBn-1 ├──── MBn ────┤

LEOn-1 |(FEO) FEO

ROP

NOOP

VERLUSTZEIT

OPCONF

# FIG 7

TU

FIG 8

←— – MBn-1 —→|←— MBn — – — – — – — →

A
1. E0
LEOn-1 | FEOn
TRENDEn

B
1. E0       2. E0
LEOn-1 | NOOP | FEOn
ROP
TRENDEn

C
1. E0       2. E0
LEOn-1 | FEOn   SEOn
TRENDEn

D
1. E0       2. E0       3.E0
LEOn-1 | NOOP | FEOn | SEOn
ROP
TRENDEn

E
1. E0       2. E0
LEOn-1 | FEOn   SEOn
TRENDEn

F
1. E0       2.E0       3.E0
LEOn-1 | NOOP | FEOn | SEOn
ROP
TRENDEn

G
1. E0       2.E0       3. E0
LEOn-1 | FEOn   SEOn   TEOn
TRENDEn

H
1. E0       2.E0       3. E0       4. E0
LEOn-1 | NOOP | FEOn | SEOn | TEOn
ROP
TRENDEn

# FIG 9

# FIG 10